# EUROPEAN PATENT APPLICATION

(11) **EP 4 844 869 A1**
(43) Date of publication of application: **25.11.2026**
(21) Application number: 26172112.0
(22) Date of filing: 14.04.2026
(51) Int. Cl.: H01M 10/0562, H01M 10/0585, H01M 10/647

(54) **BATTERY AND SOLID-STATE BATTERY**

(30) Priority: 21.05.2025 JP 2025084982
(71) Applicant: Toyota Jidosha Kabushiki Kaisha, Toyota-shi, Aichi-ken 471-8571 (JP)
(72) Inventor: TABUCHI, Takahiro, Toyota-shi, Aichi-ken, 471-8571 (JP); KAKISHITA, Kenichi, Toyota-shi, Aichi-ken, 471-8571 (JP); YAMASHITA, Yuji, Toyota-shi, Aichi-ken, 471-8571 (JP); NIDAIRA, Kyoya, Toyota-shi, Aichi-ken, 471-8571 (JP)
(74) Representative: TBK

(57) **Abstract**

There is provided a battery (1) including a first current collector (100), a first electrode layer (200), a separator layer (300), a second electrode layer (400), and a second current collector (500) that are stacked in this order. The first electrode layer (200) includes: a first electrode composite material portion (210); and a resin portion (220). The first electrode composite material portion (210) and the resin portion (220) include an overlapping portion (215) where the first electrode composite material portion (210) and the resin portion (220) overlap each other in the stacking direction. The overlapping portion (215) includes an alternating region (215A) where the first electrode composite material portion (210) and the resin portion (220) are alternately arranged in the stacking direction such that one of the first electrode composite material portion (210) and the resin portion (220) is on both sides of the other of the first electrode composite material portion (210) and the resin portion (220) in the stacking direction.

## Description

### CROSS REFERENCE TO RELATED APPLICATIONS

This nonprovisional application is based on Japanese Patent Application No. 2025-084982 filed on May 21, 2025 with the Japan Patent Office, the entire contents of which are hereby incorporated by reference.

### BACKGROUND

### Field

The present disclosure relates to a battery and a solid-state battery.

### Description of the Background Art

For example, Japanese Patent Laying-Open No. 2024-82921 discloses a lithium ion secondary battery in which a positive electrode plate and a negative electrode plate are stacked with a separator interposed therebetween. The positive electrode plate has a positive electrode current collector, a positive electrode composite material layer and an insulating protection layer. The positive electrode composite material layer and the insulating protection layer are provided on the same surface of the positive electrode current collector and are in contact with each other.

### SUMMARY

In the lithium ion secondary battery described in Japanese Patent Laying-Open No. 2024-82921, there are concerns that separation may occur at a boundary between the positive electrode composite material layer and the insulating protection layer.

An object of the present disclosure is to provide a battery and a solid-state battery, which are capable of suppressing separation at a boundary portion between an electrode composite material portion and a resin portion.

A battery according to the present disclosure is a battery including a first current collector, a first electrode layer, a separator layer, a second electrode layer, and a second current collector that are stacked in this order, wherein the first electrode layer includes: a first electrode composite material portion; and a resin portion that is in contact with an end of the first electrode composite material portion in a direction orthogonal to a stacking direction, the first electrode composite material portion and the resin portion include an overlapping portion where the first electrode composite material portion and the resin portion overlap each other in the stacking direction, and the overlapping portion includes an alternating region where the first electrode composite material portion and the resin portion are alternately arranged in the stacking direction such that one of the first electrode composite material portion and the resin portion is on both sides of the other of the first electrode composite material portion and the resin portion in the stacking direction.

A solid-state battery according to the present disclosure is a solid-state battery, wherein in the above-described battery, the separator layer contains a solid electrolyte.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a plan view of a battery according to an embodiment of the present disclosure.
Fig. 2 is a cross-sectional view taken along line II-II in Fig. 1.
Fig. 3 is an enlarged view of a range indicated by a solid line III in Fig. 2.
Fig. 4 is a cross-sectional view showing a modification of a first electrode layer.
Fig. 5 is a cross-sectional view showing a modification of the first electrode layer.
Fig. 6 is a cross-sectional view showing a modification of the first electrode layer.
Fig. 7 is a cross-sectional view showing a modification of the first electrode layer.
Fig. 8 is a cross-sectional view showing a modification of the first electrode layer.

### DESCRIPTION OF THE PREFERRED EMBODIMENTS

An embodiment of the present disclosure will be described with reference to the drawings. In the drawings referred to below, the same or corresponding members are denoted by the same reference numerals.

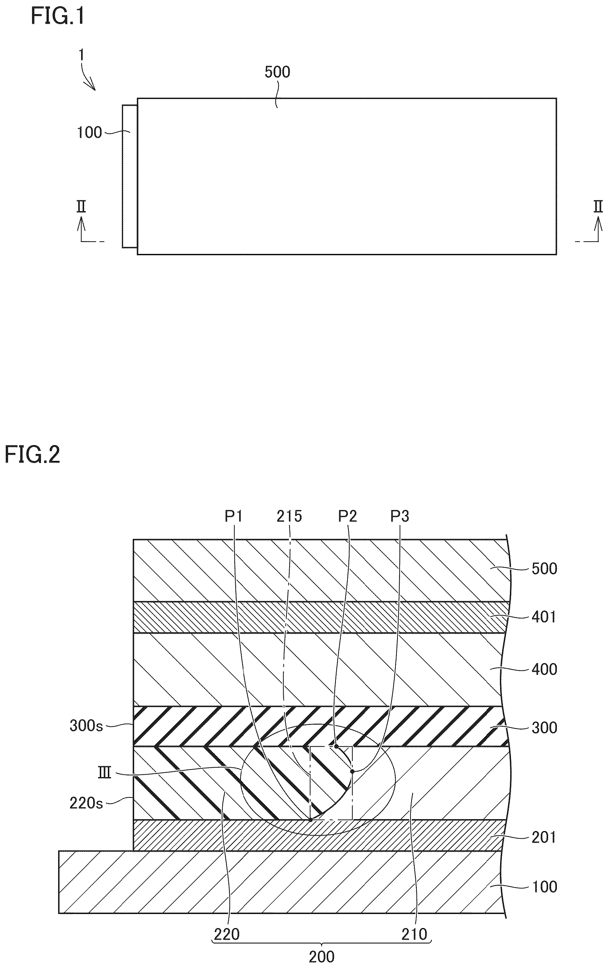

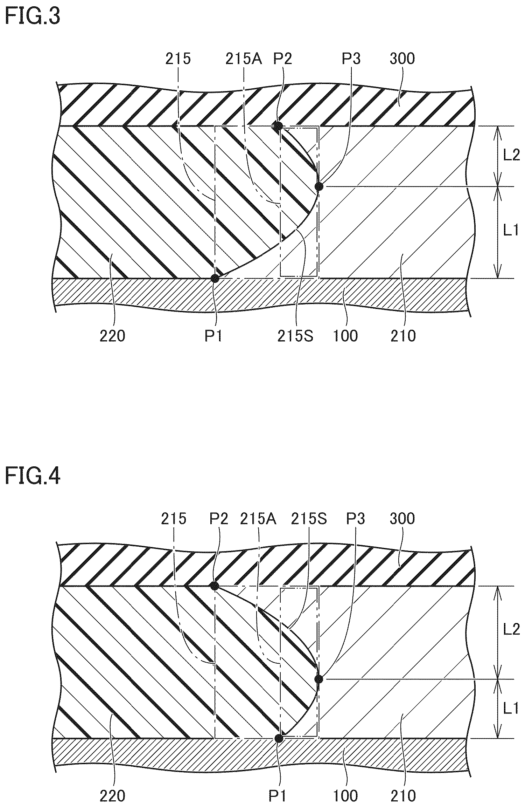

Fig. 1 is a plan view of a battery according to an embodiment of the present disclosure. Fig. 2 is a cross-sectional view taken along line II-II in Fig. 1. Fig. 3 is an enlarged view of a range indicated by a solid line III in Fig. 2.

As shown in Figs. 1 and 2, battery 1 includes a first current collector 100, a first electrode layer 200, a separator layer 300, a second electrode layer 400, and a second current collector 500. First current collector 100, first electrode layer 200, separator layer 300, second electrode layer 400, and second current collector 500 are stacked in this order. Hereinafter, a direction in which first current collector 100, first electrode layer 200, separator layer 300, second electrode layer 400, and second current collector 500 are stacked (up-down direction in Fig. 2) is denoted as a stacking direction.

First current collector 100 is made of metal such as aluminum or copper. First current collector 100 is formed into a flat plate or a thin film.

First electrode layer 200 is provided on first current collector 100. In the present embodiment, first electrode layer 200 is stacked on first current collector 100 with a carbon coating 201 interposed therebetween.

Separator layer 300 is provided on first electrode layer 200. Separator layer 300 may contain a solid electrolyte as a main ingredient. Examples of the solid electrolyte include a sulfide solid electrolyte, an oxide solid electrolyte and the like. That is, battery 1 may be a so-called solid-state battery. Alternatively, separator layer 300 may not contain the solid electrolyte as a main ingredient, and a polyolefin-based nonwoven fabric, a polyamide-based nonwoven fabric or a polyimide-based nonwoven fabric may be used.

Second electrode layer 400 is provided on separator layer 300.

Second current collector 500 is provided on second electrode layer 400. In the present embodiment, second current collector 500 is stacked on second electrode layer 400 with a carbon coating 401 interposed therebetween. For example, second current collector 500 may be made of aluminum and a nickel-plated layer may be provided on a surface of second current collector 500 that faces carbon coating 401.

In the present embodiment, first current collector 100 is formed of a positive electrode current collector and first electrode layer 200 is formed of a positive electrode layer. Second current collector 500 is formed of a negative electrode current collector and second electrode layer 400 is formed of a negative electrode layer.

As shown in Figs. 2 and 3, first electrode layer 200 has a first electrode composite material portion 210 and a resin portion 220.

First electrode composite material portion 210 contains a positive electrode composite material (positive electrode active material).

Resin portion 220 is, for example, made of a mixture of a binder resin and an insulating material. A material such as polyvinylidene fluoride (PVdF), butadiene rubber (BR), polytetrafluoroethylene (PTFE), styrene-butadiene rubber (SBR), or polyacrylic acid (PAA) may be used as the binder resin. An inorganic material such as SiO₂ or Al₂O₃ may, for example, be used as the insulating material and the insulating material may be contained in an amount of 0 to 10% by weight with respect to an amount of the binder. A Young's modulus of resin portion 220 is lower than a Young's modulus of first electrode composite material portion 210. Resin portion 220 is in contact with an end of first electrode composite material portion 210 in an orthogonal direction (left-right direction in Fig. 2) orthogonal to the stacking direction (up-down direction in Fig. 2). Resin portion 220 is located between first current collector 100 and separator layer 300. In other words, resin portion 220 faces both first current collector 100 and separator layer 300 in the stacking direction.

As shown in Fig. 2, an end face 220s of resin portion 220 in the orthogonal direction may be formed to be flush with an end face 300s of separator layer 300 in the orthogonal direction. Alternatively, a step may be formed between end face 220s of resin portion 220 and end face 300s of separator layer 300. A peripheral end face of each of first current collector 100, first electrode layer 200, separator layer 300, second electrode layer 400, and second current collector 500 in the orthogonal direction may be covered with a resin member different from resin portion 220.

As shown in Figs. 2 and 3, first electrode composite material portion 210 and resin portion 220 include an overlapping portion 215 where first electrode composite material portion 210 and resin portion 220 overlap each other in the stacking direction. As shown in Fig. 3, overlapping portion 215 includes a boundary portion 215S between first electrode composite material portion 210 and resin portion 220. In Figs. 2 and 3, overlapping portion 215 is indicated by a dash-dot line.

As shown in Fig. 3, overlapping portion 215 includes an alternating region 215A. In Fig. 3, alternating region 215A is indicated by a dash-dot-dot line. In consideration of the distinguishability between overlapping portion 215 and alternating region 215A, a part of alternating region 215A is shown with slight positional displacement from overlapping portion 215.

Alternating region 215A is a region where first electrode composite material portion 210 and resin portion 220 are alternately arranged in the stacking direction such that one of first electrode composite material portion 210 and resin portion 220 is on both sides of the other of first electrode composite material portion 210 and resin portion 220 in the stacking direction. Alternating region 215A can also be defined as a region where first electrode composite material portion 210 and resin portion 220 are alternately arranged in the stacking direction such that at least one of first electrode composite material portion 210 and resin portion 220 is plurally provided. In an example shown in Fig. 3, in alternating region 215A, first electrode composite material portion 210 and resin portion 220 are alternately arranged in the stacking direction such that there are two first electrode composite material portions 210. In other words, in alternating region 215A, first electrode composite material portion 210, resin portion 220 and first electrode composite material portion 210 are arranged in this order in the stacking direction.

As shown in Figs. 2 and 3, boundary portion 215S between first electrode composite material portion 210 and resin portion 220 includes a first-current-collector-side end P1, a separator-layer-side end P2 and an intermediate portion P3.

First-current-collector-side end P1 is an end of boundary portion 215S on the first current collector 100 side.

Separator-layer-side end P2 is an end of boundary portion 215S on the separator layer 300 side. In the present embodiment, separator-layer-side end P2 is located forward of first-current-collector-side end P1 in an orientation from resin portion 220 toward first electrode composite material portion 210 (right orientation in Fig. 3).

Intermediate portion P3 is a portion of boundary portion 215S located between first-current-collector-side end P1 and separator-layer-side end P2. Intermediate portion P3 is a portion of boundary portion 215S that is most distant from both of first-current-collector-side end P1 and separator-layer-side end P2 toward one side or the other side in the orthogonal direction. In the example shown in Fig. 3, intermediate portion P3 is located forward of first-current-collector-side end P1 and forward of separator-layer-side end P2 in the orientation from resin portion 220 toward first electrode composite material portion 210 (right orientation in Fig. 3). That is, in the example shown in Fig. 3, intermediate portion P3 is a portion of boundary portion 215S located most forward in the orientation from resin portion 220 toward first electrode composite material portion 210.

As shown in Fig. 3, a distance L2 between intermediate portion P3 and separator-layer-side end P2 in the stacking direction is smaller than a distance L1 between intermediate portion P3 and first-current-collector-side end P1 in the stacking direction.

First electrode composite material portion 210 and resin portion 220 are simultaneously applied onto carbon coating 201 by using, for example, a die. At this time, the shape of boundary portion 215S can be controlled by, for example, adjusting (e.g., increasing) a discharge pressure of resin portion 220.

As described above, in battery 1 according to the present embodiment, overlapping portion 215 between first electrode composite material portion 210 and resin portion 220 includes alternating region 215A, and thus, a contact area between first electrode composite material portion 210 and resin portion 220 is secured. Therefore, even when first electrode layer 200 expands and contracts during charging and discharging of battery 1, separation at boundary portion 215S between first electrode composite material portion 210 and resin portion 220 is suppressed.

In addition, in the above-described embodiment, separator-layer-side end P2 is located forward of first-current-collector-side end P1 in the orientation from resin portion 220 toward first electrode composite material portion 210 (right orientation in Fig. 3), and thus, a contact area between resin portion 220 and separator layer 300 is secured. The adhesion strength between resin portion 220 and separator layer 300 is higher than the adhesion strength between first electrode composite material portion 210 and separator layer 300. Therefore, in the present embodiment, separation between first electrode layer 200 and separator layer 300 when first electrode layer 200 expands and contracts is suppressed.

Although the above-described embodiment presents an example in which first current collector 100 is formed of a positive electrode current collector and first electrode layer 200 is formed of a positive electrode layer, first current collector 100 may be formed of a negative electrode current collector and first electrode layer 200 may be formed of a negative electrode layer.

Modifications of the above-described embodiment will be described below.

### <First Modification>

In an example shown in Fig. 4, separator-layer-side end P2 is located rearward of first-current-collector-side end P1 in the orientation from resin portion 220 toward first electrode composite material portion 210 (right orientation in Fig. 3). In this example, distance L2 between intermediate portion P3 and separator-layer-side end P2 in the stacking direction may be greater than distance L1 between intermediate portion P3 and first-current-collector-side end P1 in the stacking direction.

In this aspect, a contact area between first electrode composite material portion 210 and separator layer 300 is secured as compared with the above-described embodiment, and thus, an ion movement path is secured. Therefore, the performance of battery 1 is improved.

### <Second Modification>

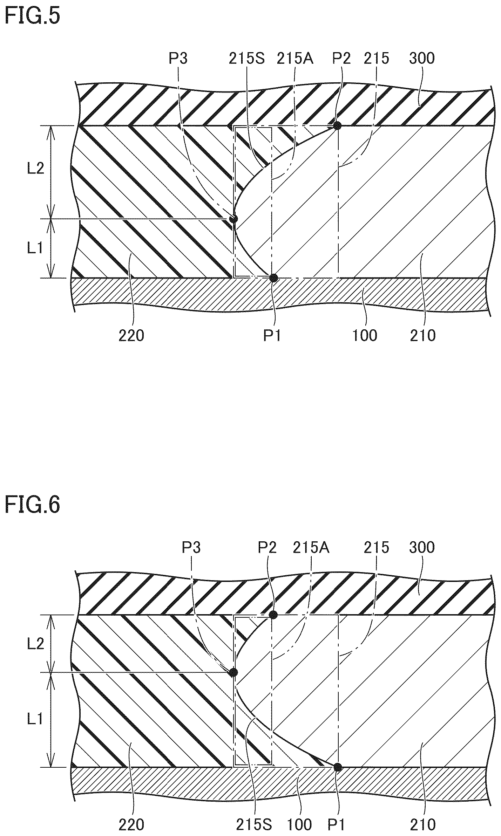

In an example shown in Fig. 5, in alternating region 215A, first electrode composite material portion 210 and resin portion 220 are alternately arranged in the stacking direction such that there are two resin portions 220. In other words, in alternating region 215A, resin portion 220, first electrode composite material portion 210 and resin portion 220 are arranged in this order in the stacking direction. That is, intermediate portion P3 is located forward of first-current-collector-side end P1 and forward of separator-layer-side end P2 in an orientation from first electrode composite material portion 210 toward resin portion 220 (left orientation in Fig. 5). In this example, separator-layer-side end P2 is located forward of first-current-collector-side end P1 in the orientation from resin portion 220 toward first electrode composite material portion 210 (right orientation in Fig. 3).

In the example shown in Fig. 5, distance L2 between intermediate portion P3 and separator-layer-side end P2 in the stacking direction may be greater than distance L1 between intermediate portion P3 and first-current-collector-side end P1 in the stacking direction.

In this aspect, a contact area between resin portion 220 and separator layer 300 is secured. Therefore, separation between first electrode layer 200 and separator layer 300 when first electrode layer 200 expands and contracts is suppressed.

### <Third Modification>

In an example shown in Fig. 6, similarly to the second modification shown in Fig. 5, in alternating region 215A, first electrode composite material portion 210 and resin portion 220 are alternately arranged in the stacking direction such that there are two resin portions 220. In this example, separator-layer-side end P2 is located rearward of first-current-collector-side end P1 in the orientation from resin portion 220 toward first electrode composite material portion 210 (right orientation in Fig. 3).

In the example shown in Fig. 6, distance L2 between intermediate portion P3 and separator-layer-side end P2 in the stacking direction may be smaller than distance L1 between intermediate portion P3 and first-current-collector-side end P1 in the stacking direction.

In this aspect, a contact area between first electrode composite material portion 210 and separator layer 300 is secured, and thus, an ion movement path is secured. Therefore, the performance of battery 1 is improved.

### <Fourth Modification>

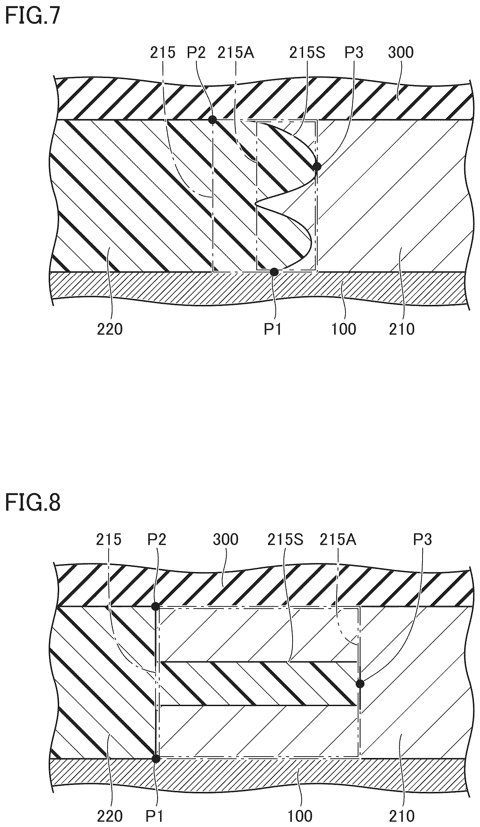

In an example shown in Fig. 7, in alternating region 215A, first electrode composite material portion 210 and resin portion 220 are alternately arranged in the stacking direction such that there are more than one first electrode composite material portion 210 and more than one resin portion 220. That is, in this example, in alternating region 215A, first electrode composite material portion 210, resin portion 220, first electrode composite material portion 210, and resin portion 220 are at least arranged in this order in the stacking direction, or resin portion 220, first electrode composite material portion 210, resin portion 220, and first electrode composite material portion 210 are at least arranged in this order in the stacking direction.

In this example, separator-layer-side end P2 is located rearward of first-current-collector-side end P1 in the orientation from resin portion 220 toward first electrode composite material portion 210 (right orientation in Fig. 3). However, although not shown, separator-layer-side end P2 may be located forward of first-current-collector-side end P1 in the orientation from resin portion 220 toward first electrode composite material portion 210 (right orientation in Fig. 3).

In addition, in the example shown in Fig. 7, intermediate portion P3 is located forward of first-current-collector-side end P1 and forward of separator-layer-side end P2 in the orientation from resin portion 220 toward first electrode composite material portion 210 (right orientation in Fig. 7). However, although not shown, intermediate portion P3 may be located forward of first-current-collector-side end P1 and forward of separator-layer-side end P2 in the orientation from first electrode composite material portion 210 toward resin portion 220 (left orientation in Fig. 7), as in the second modification and the third modification.

### <Fifth Modification>

In an example shown in Fig. 8, first-current-collector-side end P1 and separator-layer-side end P2 substantially overlap in the stacking direction. In other words, overlapping portion 215 and alternating region 215A are substantially the same region.

In this example, intermediate portion P3 is located forward of first-current-collector-side end P1 and forward of separator-layer-side end P2 in the orientation from resin portion 220 toward first electrode composite material portion 210 (right orientation in Fig. 8). However, although not shown, intermediate portion P3 may be located forward of first-current-collector-side end P1 and forward of separator-layer-side end P2 in the orientation from first electrode composite material portion 210 toward resin portion 220 (left orientation in Fig. 8).

It will be understood by those skilled in the art that the exemplary embodiment described above is a specific example of the following aspects.

### [Aspect 1]

A battery comprising a first current collector, a first electrode layer, a separator layer, a second electrode layer, and a second current collector that are stacked in this order, wherein
the first electrode layer includes:
   a first electrode composite material portion; and
   a resin portion that is in contact with an end of the first electrode composite material portion in a direction orthogonal to a stacking direction,
the first electrode composite material portion and the resin portion include an overlapping portion where the first electrode composite material portion and the resin portion overlap each other in the stacking direction, and
the overlapping portion includes an alternating region where the first electrode composite material portion and the resin portion are alternately arranged in the stacking direction such that one of the first electrode composite material portion and the resin portion is on both sides of the other of the first electrode composite material portion and the resin portion in the stacking direction.

In this battery, in the overlapping portion, the first electrode composite material portion and the resin portion are alternately arranged in the stacking direction such that one of the first electrode composite material portion and the resin portion is on both sides of the other of the first electrode composite material portion and the resin portion in the stacking direction, and thus, a contact area between the first electrode composite material portion and the resin portion is secured. Therefore, separation at an interface between the first electrode composite material portion and the resin portion is suppressed.

### [Aspect 2]

The battery according to Aspect 1, wherein
the first current collector is a positive electrode current collector,
the first electrode layer is a positive electrode layer,
the second current collector is a negative electrode current collector,
the second electrode layer is a negative electrode layer, and
in the alternating region, the first electrode composite material portion, the resin portion and the first electrode composite material portion are arranged in this order in the stacking direction.

In this aspect, a contact area between the positive electrode layer and the positive electrode current collector, and a contact area between the positive electrode layer and the separator layer are secured. Therefore, resistance between the positive electrode layer and the positive electrode current collector, and resistance between the positive electrode layer and the separator layer are reduced.

### [Aspect 3]

The battery according to Aspect 2, wherein
a boundary portion between the first electrode composite material portion and the resin portion includes:
a first-current-collector-side end that is an end on the first current collector side; and
a separator-layer-side end that is an end on the separator layer side, and the separator-layer-side end is located forward of the first-current-collector-side end in an orientation from the first electrode composite material portion toward the resin portion.

In this aspect, a contact area between the resin portion and the separator layer is secured. Therefore, separation between the resin portion and the separator layer is suppressed.

### [Aspect 4]

The battery according to Aspect 3, wherein
the boundary portion further includes an intermediate portion located between the first-current-collector-side end and the separator-layer-side end,
the intermediate portion is located most forward of the boundary portion in an orientation from the resin portion toward the first electrode composite material portion, and
a distance between the intermediate portion and the separator-layer-side end in the stacking direction is greater than a distance between the intermediate portion and the first-current-collector-side end in the stacking direction.

In this aspect, a volume of the first electrode composite material portion located between the separator-layer-side end and the intermediate portion is secured, and thus, an ion movement path is secured. Therefore, the performance of the battery is improved.

### [Aspect 5]

The battery according to Aspect 1, wherein
the first current collector is a positive electrode current collector,
the first electrode layer is a positive electrode layer,
the second current collector is a negative electrode current collector,
the second electrode layer is a negative electrode layer, and
in the alternating region, the resin portion, the first electrode composite material portion and the resin portion are arranged in this order in the stacking direction.

In this aspect, separation between the resin portion and the first current collector, and separation between the resin portion and the separator layer are suppressed. This is because the adhesion strength between the resin portion and the first current collector is higher than the adhesion strength between the first electrode composite material portion and the first current collector and the adhesion strength between the resin portion and the separator layer is higher than the adhesion strength between the first electrode composite material portion and the separator layer.

### [Aspect 6]

The battery according to Aspect 5, wherein
a boundary portion between the first electrode composite material portion and the resin portion includes:
   a first-current-collector-side end that is an end on the first current collector side; and
   a separator-layer-side end that is an end on the separator layer side, and
the separator-layer-side end is located forward of the first-current-collector-side end in an orientation from the first electrode composite material portion toward the resin portion.

In this aspect, a contact area between the first electrode layer and the separator layer is secured. Therefore, higher ion conductivity is achieved.

### [Aspect 7]

The battery according to Aspect 6, wherein
the boundary portion further includes an intermediate portion located between the first-current-collector-side end and the separator-layer-side end,
the intermediate portion is located most forward of the boundary portion in an orientation from the first electrode composite material portion toward the resin portion, and
a distance between the intermediate portion and the separator-layer-side end in the stacking direction is smaller than a distance between the intermediate portion and the first-current-collector-side end in the stacking direction.

In this aspect, a contact area between the first electrode composite material portion and the separator layer is secured, and thus, an ion movement path is secured.

Therefore, the performance of the battery is improved.

### [Aspect 8]

The battery according to Aspect 1, wherein
the resin portion is located between the first current collector and the separator layer.

### [Aspect 9]

A solid-state battery, wherein
in the battery according to any one of Aspects 1 to 8, the separator layer contains a solid electrolyte.

### [Aspect 10]

A battery comprising a first current collector, a first electrode layer, a separator layer, a second electrode layer, and a second current collector that are stacked in this order, wherein
the first electrode layer includes:
   a first electrode composite material portion; and
   a resin portion that is in contact with an end of the first electrode composite material portion in a direction orthogonal to a stacking direction,
a boundary portion between the first electrode composite material portion and the resin portion includes:
   a first-current-collector-side end that is an end on the first current collector side;
   a separator-layer-side end that is an end on the separator layer side; and
   an intermediate portion located between the first-current-collector-side end and the separator-layer-side end, and
the intermediate portion is distant from both of the first-current-collector-side end and the separator-layer-side end toward one side or the other side in an orthogonal direction orthogonal to the stacking direction.

### [Aspect 11]

The battery according to Aspect 8, wherein
the intermediate portion is located forward of the first-current-collector-side end and forward of the separator-layer-side end in an orientation from the resin portion toward the first electrode composite material portion.

Although the embodiment of the present disclosure has been described, it should be understood that the embodiment disclosed herein is illustrative and non-restrictive in every respect. The scope of the present disclosure is defined by the terms of the claims, and is intended to include any modifications within the scope and meaning equivalent to the terms of the claims.

## Claims

1. A battery (1) comprising a first current collector (100), a first electrode layer (200), a separator layer (300), a second electrode layer (400), and a second current collector (500) that are stacked in this order, wherein
the first electrode layer includes:
a first electrode composite material portion (210); and
a resin portion (220) that is in contact with an end of the first electrode composite material portion in a direction orthogonal to a stacking direction,
the first electrode composite material portion (210) and the resin portion (220) include an overlapping portion (215) where the first electrode composite material portion (210) and the resin portion (220) overlap each other in the stacking direction, and
the overlapping portion (215) includes an alternating region (215A) where the first electrode composite material portion (210) and the resin portion (220) are alternately arranged in the stacking direction such that one of the first electrode composite material portion (210) and the resin portion (220) is on both sides of the other of the first electrode composite material portion (210) and the resin portion (220) in the stacking direction.

2. The battery according to claim 1, wherein
the first current collector (100) is a positive electrode current collector,
the first electrode layer (200) is a positive electrode layer,
the second current collector (500) is a negative electrode current collector,
the second electrode layer (400) is a negative electrode layer, and
in the alternating region (215A), the first electrode composite material portion (210), the resin portion (220) and the first electrode composite material portion (210) are arranged in this order in the stacking direction.

3. The battery according to claim 2, wherein
a boundary portion (215S) between the first electrode composite material portion and the resin portion (220) includes:
a first-current-collector-side end (P1) that is an end on the first current collector side; and
a separator-layer-side end (P2) that is an end on the separator layer side, and
the separator-layer-side end (P2) is located forward of the first-current-collector-side end (P1) in an orientation from the first electrode composite material portion toward the resin portion (220).

4. The battery according to claim 3, wherein
the boundary portion (215S) further includes an intermediate portion (P3) located between the first-current-collector-side end (P1) and the separator-layer-side end (P2),
the intermediate portion (P3) is located most forward of the boundary portion (215S) in an orientation from the resin portion (220) toward the first electrode composite material portion, and
a distance (L2) between the intermediate portion (P3) and the separator-layer-side end (P2) in the stacking direction is greater than a distance (L1) between the intermediate portion (P3) and the first-current-collector-side end (P1) in the stacking direction.

5. The battery according to claim 1, wherein
the first current collector (100) is a positive electrode current collector,
the first electrode layer (200) is a positive electrode layer,
the second current collector (500) is a negative electrode current collector,
the second electrode layer (400) is a negative electrode layer, and
in the alternating region (215A), the resin portion (220), the first electrode composite material portion (210) and the resin portion (220) are arranged in this order in the stacking direction.

6. The battery according to claim 5, wherein
a boundary portion (215S) between the first electrode composite material portion (210) and the resin portion (220) includes:
a first-current-collector-side end (P1) that is an end on the first current collector side; and
a separator-layer-side end (P2) that is an end on the separator layer (300) side, and
the separator-layer-side end (P2) is located forward of the first-current-collector-side end (P1) in an orientation from the first electrode composite material portion toward the resin portion (220).

7. The battery according to claim 6, wherein
the boundary portion (215S) further includes an intermediate portion (P3) located between the first-current-collector-side end (P1) and the separator-layer-side end (P2),
the intermediate portion (P3) is located most forward of the boundary portion (215S) in an orientation from the first electrode composite material portion (210) toward the resin portion (220), and
a distance (L2) between the intermediate portion (P3) and the separator-layer-side end (P2) in the stacking direction is smaller than a distance (L1) between the intermediate portion (P3) and the first-current-collector-side end (P1) in the stacking direction.

8. The battery according to claim 1, wherein
the resin portion (220) is located between the first current collector (100) and the separator layer (300).

9. A solid-state battery, wherein
in the battery according to claim 1, the separator layer (300) contains a solid electrolyte.
